Europäisches Patentamt

**European Patent Office**

**Office européen des brevets**

(11) Publication number: **0 098 329**
A1

# EUROPEAN PATENT APPLICATION

(21) Application number: **82110140.9**

(51) Int. Cl.³: **B 62 M 3/08**

(22) Date of filing: **04.11.82**

(30) Priority: **09.07.82 IT 498682U**

(71) Applicant: **C.A.M. di Bacchilega Mario & C. S.n.c., Via Selice 2/6, I-40027 Mordano (Bologna) (IT)**

(43) Date of publication of application: **18.01.84**
**Bulletin 84/3**

(72) Inventor: **Bacchilega, Mario, Via Billi 9, I-40026 Imola (IT)**
Inventor: **Venturini, Agostino, Via Zaganelli 64, I-48024 Massalombarda Ravenna (IT)**

(74) Representative: **Modiano, Guido et al, MODIANO, JOSIF, PISANTY & STAUB Modiano & Associati Via Meravigli, 16, I-20123 Milan (IT)**

(84) Designated Contracting States: **AT BE CH DE FR GB LI LU NL SE**

(54) **Pedal for sport bicycles.**

(57) The pedal comprises a shaped plate (16), intended for fastening under the cyclist's shoe, and a track assembly (10, 11) including a fixed rail (10) and a movable rail (11) both extending parallel to the pedal shaft (7).

The fixed rail (10), in the inoperative condition thereof, is effective to arrange itself into a position vertically above the movable rail, while the latter is effective to assume a diverging position with respect to the fixed rail (10), the plate (16) being adapted to engage with the fixed rail (10) such as to cause the pedal to rotate to a horizontal position whereat the movable rail (11) is snap engaged with the plate itself (16).

COMPLETE DOCUMENT

- 2 -     0098329

This invention relates to a pedal for sport bicycles.

As is known, racing bicycle pedals are equipped with foot bindings. Such a binding substantially comprises a cage structure wherein the toe end of the cyclist's shoe is inserted, to be then fastened to the pedal by means of a tie strap.

Conventional bindings show more than a few disadvantages, and in particular, can be dangerous in the event of the cyclist falling down, since they cannot be released promptly.

Also complained is in some instances the possibility of the bindings being released unintentionally, as well as the harmful effect of the straps, which may tighten the foot to the point of hindering blood circulation.

Thus the task of this invention is to obviate the cited deficiencies by providing a pedal for sport bicycles which affords in particular quick fastening/releasing features.

Within that task it is an object of the invention to provide a pedal for sport bicycles which is of simple design, absolutely reliable in operation, and of relatively low cost.

According to one aspect of the invention the mentioned task and object are achieved by a pedal for sport bicycles, characterized in that it comprises a shaped plate intended for fastening under the cyclist's shoe, and a track assembly including a fixed rail and a movable rail both extending substantially parallel to the axis of

- 3 -

0098329

the pedal shaft, in the inoperative condition said fixed rail being adapted to arrange itself, under the effect of the gravity force of the pedal with respect to said shaft, into a position vertically above said movable rail, and said movable rail being adapted to occupy, under the effect of the moment of its related gravity force with respect to a related pivot pin, a diverging position with respect to said fixed rail, said plate being adapted to engage with said fixed rail such as to cause the pedal to rotate to a horizontal position whereat said movable rail is snap engaged with said plate.

The invention features will be more clearly understood from the following detailed description of a preferred embodiment of this pedal for sport bicycles, with reference to the accompanying illustrative drawings, where:

Figure 1 is a longitudinal section view showing in elevation this pedal, in the engaged position thereof;

Figure 2 is a plan view of the pedal;

Figure 3 is a cross-sectional view of the pedal;

Figure 4 is a plan view of the pedal plate; and

Figures 5 and 6 are similar views to Figure 1, showing the pedal in its inoperative position and in its partly engaged position, respectively.

With reference to the cited figures, the numeral 1 designates generally this pedal for sport bicycles, and the numeral 2 designates the cyclist's shoe to be engaged or fastened to the pedal.

- 4 -

0098329

The pedal 1 comprises substantially a frame 3 of quadrilateral configuration, which frame defines a cylindrical sleeve 4 at the middle thereof. The sleeve 4 is mounted rotatable, through rolling bearings 5,6, on a shaft 7 for attaching the pedal to the bicycle. To this aim, the shaft 7 is arranged to protrude with one end, having a threaded shank 7a, out of the sleeve 4, the other end of the shaft having a self locking nut 8 adapted to prevent it from being pulled off. The sleeve 4 defines at its ends bosses 4a and 4b, wherein the seat for the bearings 5,6 is formed, and is closed, on the opposite side from that where the shaft 7 protrudes by a cover 9.

The pedal 1 is provided with a track assembly including a pair of guides or rails 10,11 located along the sides of the frame 3 substantially parallel to the shaft 7. The rail 10 is fixed, whereas the rail 11 is movable, about a related pivot pin 12, with respect to the frame 3.

The fixed rail 10 defines a recess 13 facing the inside of the frame 3 and being open at the outboard end of the pedal.

The movable rail 11 comprises a pawl 14 pivoted on the pin 12 and rotatable between an angular position whereat it bears on the frame 3 and a position whereat it abuts, through a front lug 14a, against the sleeve 4.

The movable rail 11 defines, relatively to the lug 14a, a respective recess 15 facing the inboard side of the frame 3 and being open at both ends.

In the track formed by the rails 10,11, a plate 16 is arranged to engage, as will be explained hereinafter, which is intended for fastening under the cyclist's shoe 2.

The plate 16, expediently formed from a plastic material, has at the bottom a raised portion 16a of quadrilateral configuration. The raised portion 16a defines, along two opposed sides, a pair of guides 17, 18, which are adapted to be inserted into the recesses 13,15, respectively, of the rails 10,11.

The position of attachment of the plate 16 to the cyclist's shoe is made adjustable by means of a slot 19 formed through the plate itself; final fastening is instead accomplished through screw means 20 which are inserted into any of plural holes 21 located at the vertices of a quadrilateral on the plate 16.

Advantageously, moreover, the plate 16 will define at the bottom a rib 22 adapted to protect it from damage when the cyclist's shoe is rested on the ground.

This pedal operates as follows.

Owing to the moment of the gravity force of the frame 3 relatively to the shaft 7, in the rest or inoperative position, the pedal 1 will arrange itself on a substantially vertical plane, as shown in Figure 5, with the fixed rail 10 overlying the movable rail 11. The pawl 14, in turn, under the effect of its respective gravity force relatively to the pin 12, is rotated into its position bearing on the frame 3, and the movable rail 11 is spread away from the fixed rail 10. To fasten the shoe 2 to the pedal, the latter is turned about the shaft 7 by toe action with the

0098329

plate 16, until the guide 17 of the latter is inserted into the recess 13 on the fixed rail 10.

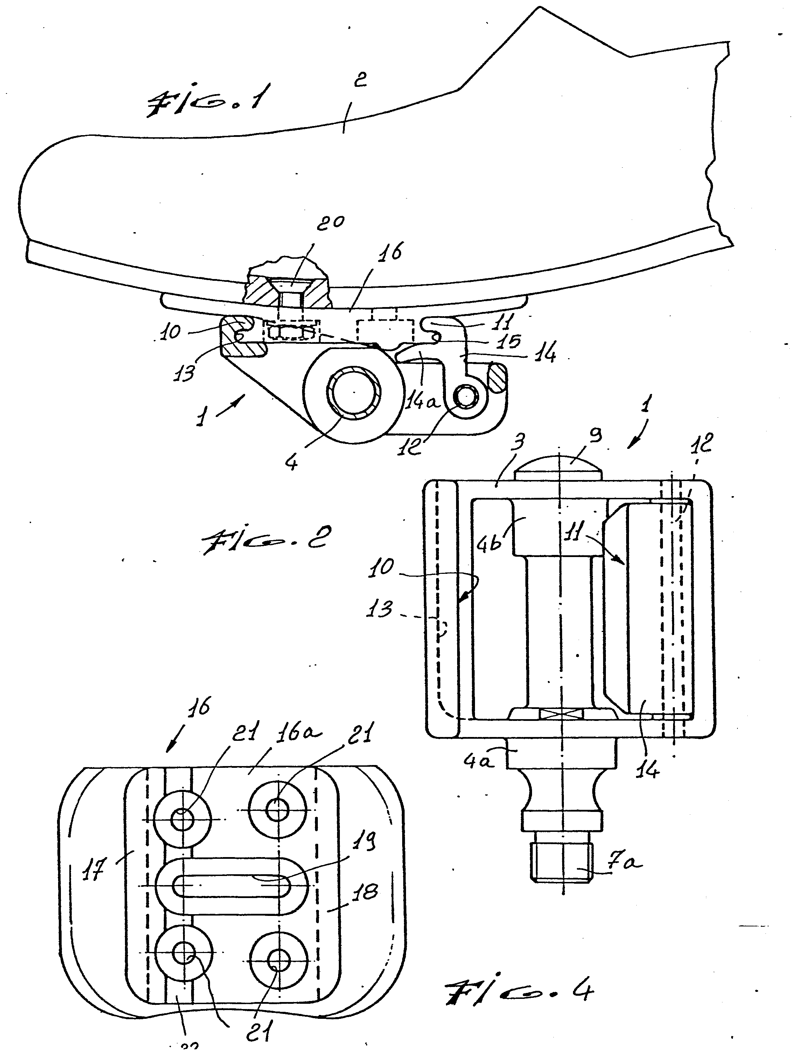

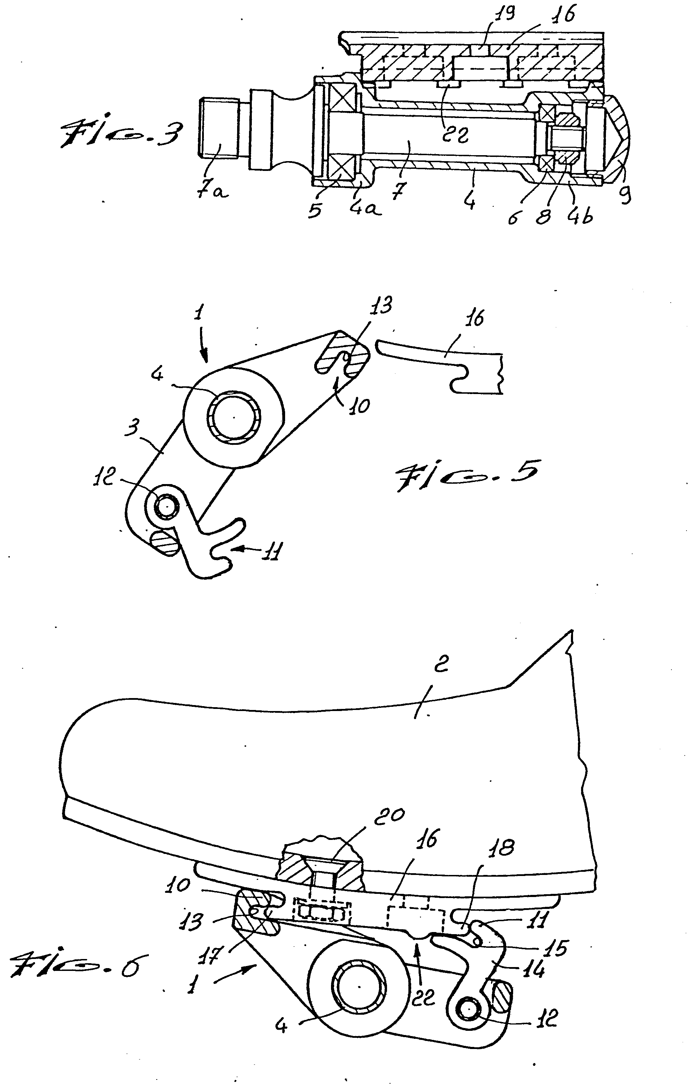

As clearly shown in Figure 6, with the plate bearing onto the pedal and the guide 17 fully inserted into the recess 13, the pawl 14 is caused to rotate. The plate 16, in fact, will act on the lug 14a of the pawl, to thus force the guide 18 into snap engagement in the recess 15 on the movable rail 11. Once the engagement operation is completed, in the position shown in Figure 1, the engagement is a reliably secure one.

To enhance that security, the track on which the plate 16 is mounted is advantageously formed to slope gently toward the pedal inside on the plane containing the shaft axis.

To release the cyclist's shoe from the pedal, the plate must be slipped sideways on the track formed by the rails 10,11, in a direction outboard of the pedal. This operation may be effected promptly by simply spreading the cyclist's legs apart.

Thus, in addition to eliminating the straps of conventional bindings, the pedal of this invention achieves its objects of allowing a fast engagement and disengagement of the cyclist's shoe. Also to be noted is the fact that the plate 16 affords an optimum distribution of the foot effort over the pedal.

In practicing the invention, the materials, shapes, and dimensions may be any one to meet individual application requirements.

## CLAIMS

1. A pedal for sport bicycles, characterized in that it comprises a shaped plate (16) intended for fastening under the cyclist's shoe, and a track assembly including a fixed rail (10) and a movable rail (11) both extending substantially parallel to the axis of the pedal shaft (7), in the inoperative condition said fixed rail (10) being adapted to arrange itself, under the effect of the gravity force of the pedal (1) with respect to said shaft (7), into a position vertically above said movable rail (11), and said movable rail (11) being adapted to occupy, under the effect of the moment of its related gravity force with respect to a related pivot pin (12), a diverging position with respect to said fixed rail (10), said plate (16) being adapted to engage with said fixed rail (10) such as to cause the pedal (1) to rotate to a horizontal position whereat said movable rail (11) is snap engaged with said plate (16).

2. A pedal according to Claim 1, characterized in that said plate (16) defines a pair of guides (17,18) adapted for insertion into respective recesses (13,15) defined on said fixed rail (10) and movable rail (11).

3. A pedal according to Claim 1, characterized in that said movable rail (11) comprises a pivotable pawl (14) arranged to rotate along an axis substantially parallel to the shaft (7) of said pedal (1) between a position whereat said movable rail (11) is spread away from said fixed rail (10) and a position whereat said movable rail (11) faces said fixed rail (10), thereby defining said track (10,11).

0098329

4. A pedal according to Claim 1, characterized in that said plate (16) is adapted to realease itself from said track (10,11) by sliding thereon sideways in an outward direction to the pedal (1).

5. A pedal according to Claim 1, characterized in that said plate (16) has a slot (19) formed therein for adjusting the attachment position of the cyclist's shoe (2).

6. A pedal according to Claim 1, characterized in that said track (10,11), wherewith said plate (16) is adapted to engage, is arranged to slope gently inwards to the pedal (1) on the plane containing the axis of said pedal shaft (7).

7. A pedal according to Claim 1, characterized in that said plate (16) defines at the bottom a rib (16a) adapted to protect said plate (16) against damage when the cyclist's shoe is rested on the ground.

8. A pedal for sport bicycles according to the preceding claims and as herein described and illustrated.

FIG.1

2

20

16

10

13

1

4

12

14a

15

14

11

FIG.2

3

9

1

12

4b

11

10

13

14

4a

7a

FIG.4

16

21

16a

21

17

19

18

21

21

0098329

**Fig.3**

7a  5  4a  7  4  22  6  8  4b  9  19  16

**Fig.5**

1  4  3  12  13  10  11  16

**Fig.6**

2  20  16  18  10  13  17  1  4  22  11  15  14  12

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | WO-A-8 001 056 (BADERSBACH) <br> * Whole document * | 1,2,4 | B 62 M  3/08B |
| A | FR-A-2 446 759 (KOMITET PO FIZICHESKOI KULTURE I SPORTU PRI SOVETE MINISTROV SSSR) <br> * Whole document * | 1,4 | |
| A | FR-A- 664 795 (ANDRE) <br> * Whole document * | 1,3 | |
| A | BE-A- 885 336 (BACHELART) | | |

TECHNICAL FIELDS
SEARCHED (Int. Cl. ³)

B 62 M

The present search report has been drawn up for all claims

| Place of search | Date of completion of the search | Examiner |
|---|---|---|
| THE HAGUE | 17-10-1983 | GEMMELL R.I.D. |